Europäisches Patentamt

European Patent Office

Office européen des brevets

(19)

(11) EP 0 572 788 B1

(12) **EUROPÄISCHE PATENTSCHRIFT**

(45) Veröffentlichungstag und Bekanntmachung des Hinweises auf die Patenterteilung:
**15.07.1998 Patentblatt 1998/29**

(51) Int. Cl.$^6$: **C01B 21/082**

(21) Anmeldenummer: **93106464.6**

(22) Anmeldetag: **21.04.1993**

(54) **Submicrone Carbonitrid-Pulver, Verfahren zu ihrer Herstellung sowie deren Verwendung**

Submicron carbonitride powder, process for the preparation thereof and application

Poudre de carbonitrure submicronique, procédé pour sa production et application

(84) Benannte Vertragsstaaten:
**AT BE CH DE ES FR GB LI LU SE**

(30) Priorität: **04.05.1992 DE 4214721**
**21.05.1992 DE 4216802**

(43) Veröffentlichungstag der Anmeldung:
**08.12.1993 Patentblatt 1993/49**

(73) Patentinhaber:
**H.C. Starck GmbH & Co. KG**
**38642 Goslar (DE)**

(72) Erfinder:
• **Gries, Benno, Dr.**
**W-3380 Goslar (DE)**
• **Gille, Gerhard, Dr.**
**W-3380 Goslar (DE)**
• **Salvadori, Mario**
**W-3380 Goslar (DE)**

(74) Vertreter:
**Steiling, Lothar, Dr. et al**
**Bayer AG**
**Konzernbereich RP**
**Patente und Lizenzen**
**51368 Leverkusen (DE)**

(56) Entgegenhaltungen:
**EP-A- 0 042 660        EP-A- 0 447 388**
**EP-A- 0 464 396        GB-A- 1 188 011**

• **JOURNAL OF THE EUROPEAN CERAMIC SOCIETY Bd. 5, Nr. 4, 1989, Seiten 257 - 265 T. LICKO ET AL. 'Carbothermal reduction and nitriding of TiO2.'**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft submicrone Carbonitrid-Pulver des Titans und gegebenenfalls weiterer Übergangsmetalle der fünften ($Me^{(5)}$) und sechsten ($Me^{(6)}$) Nebengruppe des Periodensystems der Elemente der allgmeinen molaren Zusammensetzung ($Ti_\ell Me_m^{(5)} Me_{1-\ell-m}^{(6)}$) ($C_{1-y}N_y$)$_z$, wobei $0{,}50 \leq \ell \leq 1$; $0 < m < 0{,}15$; $0 \leq (1-\ell-m) \leq 0{,}50$; $0{,}10 \leq y \leq 0{,}95$ und $z \geq 0{,}90$ ist, Verfahren zur Herstellung dieser Pulver sowie deren Verwendung.

Moderne Carbonitrid-Cermets erobern sich dank ständiger legierungstechnischer und technologischer Verbesserungen (z.B. Drucksintertechnik) einen in Umfang und Anwendungsbreite stetig wachsenden Markt als Schneidstoffe, Umformwerkzeuge und hochwertige Verschleißteile. Bestimmt wird diese Entwicklung durch die Tatsache, daß diese Cermets mit ihrer Eigenschaftskombination von Verschleißfestigkeit, Warmhärte und thermischer Beständigkeit den aktuellen Trends bei der Werkzeugentwicklung genau entsprechen.

So erfordern die modernen Metallbearbeitungstechniken, der wachsende Anteil von Fein- und Schlichtbearbeitungen sowie der verstärkte Einsatz höher legierter Konstruktionstähle eine ausreichende Kantenstabilität und hohe thermische Verschleißfestigkeit der Spanungs- und Umformwerkzeuge, wie sie gerade die TiCN-Cermets besitzen.

Für die Herstellung von Titan-Carbonitriden sind verschiedene Verfahren bekannt geworden.

So ist die separate Synthese von TiC und TiN durch Carburierung bzw. Nitrierung von Ti mit anschließender Diffusionsglühung beschrieben entsprechend der Gleichung

$$yTiN + (1-y)TiC \rightarrow TiC_{1-y}N_y \qquad (1)$$

bei Temperaturen $T > 1700°C$ und Haltezeiten $t > 2\,h$ nach wie vor die häufigste Herstellungsvariante. Ausgehend von der separaten Herstellung von Carbiden und Nitriden werden in der DE-A 24 20 768 Carbid-Metall-Gemische oder Carbid-Nitrid-Gemische unter Stickstoffatmosphäre so geflüht, daß spinodal entmischte Carbonitride entstehen, die stickstoffreiche Phasen der IVa Metalle und stickstoffarme Phasen der Va-und VIa-Metalle enthalten. Diese spinodale Entmischung soll zu einem verbesserten Sinterverhalten der Carbonitride führen, da die Gasungsprozesse reduziert, die Benetzungsverhältnisse zwischen Binder und stickstoffarmer Hartstoffphase verbessert und das Kornwachstum vermindert wird. Bedingt durch die Langzeitglühungen und die damit notwendigen, intensiven Aufmahlvorgänge müssen jedoch die Nachteile der breiten Korngrößenverteilung, der ungünstigen Kornform und des selektiven Kornwachstums in Kauf genommen werden.

Außerdem liegen die mittleren Korngrößen dieser Carbonitride deutlich über 1 $\mu$m und die daraus hergestellten Cermets haben Gefüge mit Kornabmessungen größer als 1 $\mu$m bzw. hohe Standardabweichungen (Streubreiten) der Korngrößen. Die zur Diffusionsglühung notwendigen Temperaturen und Haltezeiten bedingen diese starke Versinterung der Primärkörner. Bei der Aufarbeitung zu Pulvern mit mittleren Korngrößen von 2,5 $\mu$m und darunter (z.B. mit Attritoren) wird sehr viel Splitterkorn und ein entsprechend hoher Anteil an Spaltflächen erzeugt.

In den EP-A 447 388 und EP-A 464 396 wird die carbothermische Reduktion und Nitridierung von $TiO_2$ entsprechend der Gleichung

$$TiO_2 + (3-y)C + y/2N_2 \rightarrow TiC_{1-y}N_y + 2CO \qquad (2)$$

bei Temperaturen $T > 1600°C$ mit Haltezeiten $t > 2\,h$ unter Stickstoffatmosphäre beschrieben. Dieses Verfahren gestattet durch abgesenkte Synthesetemperaturen und Haltezeiten sowie geeignete $N_2$-Partialdrücke eine Kornfeinung; der mittlere Korndurchmesser liegt aber noch bei 1,3 bis 2,0 $\mu$m und die Streubreite erreicht nur

$$(delta)\ D = (d_{(90)} - d_{(10)}) > 2\ \mu m\ (Zentrifuge).$$

Nach diesen Verfahren lassen sich zwar prinzipiell weniger versinterte Carbonitrid-Pulver erzeugen, was bei einer anschließenden Mahlung auch zu enger dispergierten Pulvern führt, die mittlere Teilchengröße bleibt jedoch deutlich größer als 1 $\mu$m. Das Gefüge eines mit diesem Carbonitrid hergestellten Cermet ist vergleichbar mit demjenigen, das bei Einsatz eines intensiv aufgemahlenen, diffusionsgeglühten Carbonitrids erreicht wird. Eine intensive Aufmahlung des so hergestellten Carbonitrids oder der daraus hergestellten Cermetmischung senkt zwar die mittlere Kornabmessung im Cermetgefüge, verbreitert jedoch gleichzeitig die Streubreite der entsprechenden charakteristischen Gefügeabmessungen.

Aus T. Licko et al. (Journal of the European Ceramic Society, Vol. 5, No. 5 (1989), P. 257-265) ist ein Verfahren bekannt, das gegenüber der Glühung von trocken gemischten Oxid-Ruß-Gemengen Vorteile für die Herstellung von feinkörnigen Cornonitriden bringt. Dabei wird $TiO_2$ in einer wäßrigen Saccharoselösung suspendiert, diese Lösung getrocknet und unter $N_2$ bei 600°C geglüht, so daß einzelne $TiO_2$-Teilchen mit dem pyrolysierten Kohlenstoff beschichtet werden. Anschließend wird dem getrockneten und pyrolysierten Gemenge Ruß in stöchiometrischer Menge zugesetzt. Eine Glühung unter reinem Stickstoff führt zu sehr feinteiligen (kohlenstoffarmen) Carbonitriden oder besser Oxicarbonitriden, die jedoch hohe $C_{frei}$- und Sauerstoffgehalte aufweisen.

Dadurch wird eine Sinterung mit Ni/Co-Bindemetallen sehr erschwert, wenn nicht ganz verhindert, da (a) die Benetzung zwischen (Oxi) Carbonitriden und flüssigem Ni/Co-Binder stark beeinträchtigt und (b) Kohlenstoffporosität gebildet wird. Beide Testbestände führen zu einem TiCN-Cermet mit geringer Härte und Festigkeit.

Aus der GB-A-11 88 011 ist die carbothermische Reduktion und Carbonitrierung von $UO_2$ bekannt, wobei sowohl das Oxid ($UO_2$) als auch der Kohlenstoff in eine kolloidale Form überführt und miteinander zur Reaktion gebracht, d.h. unter Stickstoff geglüht werden.

In der EP-A-42 660 wird ein Verfahren offenbart, bei dem $TiCl_4$ und Kohlehydrate in Toluol gelöst werden. Durch Einleiten von Ammoniak in die $TiCl_4$-Lösung entsteht ein Fällungsprodukt, das mit dem in Toluol gelösten Kohlehydrat bei der Temperatur von festem Methanol zur Reaktion gebracht wird. Der entstehende Ti- und N-haltige Precursor wird nach Abdestillation des Toluols unter Argon bei Temperaturen bis zu 1600°C geglüht. Die entstehenden Titannitride sind sehr feinkörnig, weisen jedoch höhere Gehalte an Chlor und organischen Bestandteilen auf.

Schließlich ist die Abscheidung aus der Gasphase bekannt entsprechend der Reaktion

$$TiCl_4 + (1-y)CH_4 + y/2N_2 + 2yH_2 \rightarrow TiC_{1-y}N_y + 4HCl \qquad (3)$$

bei Temperaturen von 700 bis 950°C.

Hiernach lassen sich über die Reaktion der gasförmigen Spezies extrem feine Pulver mit optischen Primärgrößen <0,1 μm herstellen. Bedingt durch die hohe, sehr reaktive Oberfläche werden jedoch die ebenfalls bei der Reaktion gebildeten Produkte wie beispielsweise HCl und $NH_4Cl$ an den Oberflächen der Pulver bis zu einigen Zehntel Gewichtsprozent adsorbiert und führen beim Sinterprozeß zu Haftungs- und Gasungproblemen, die letztlich die Gefügeausbildung ungünstig beeinträchtigen sowie Porosität verursachen und/oder die mechanischen Eigenschaften über ungünstige Korngrenzensegregationen negativ beeinflussen. Außerdem ist die Gasphasenabscheidung von TiCN-Pulvern aus Kostengründen für die Cermet-Schneidstoffe kein wirtschaftlich vertretbares Verfahren.

Ein weiterer Nachteil, der derzeit noch den Einsatz der Cermets begrenzt, ist die gegenüber konventionellen WC-Hartmetallen geringere Zähigkeit bei Normaltemperatur. Diese verminderte Zähigkeit bzw. Festigkeit begrenzt den Einsatz als Spanungswerkzeuge, insbesondere bei erhöhten mechanischen Anforderungen, wie sie bei Schnitten mit hohen Vorschüben und Schnittunterbrechungen auftreten.

Zähigkeitsverbesserungen lassen sich zwar durch höhere Bindemetallgehalte erreichen, diese gehen jedoch zu Lasten der Verschleißfestigkeit und Hochtemperaturbeständigkeit, so daß die diesbezüglichen Vorteile der Cermets relativiert oder gar ganz abgebaut werden.

Entscheidende Fortschritte können jedoch von feinkörnigen und gleichmäßigen, homogenen Gefügen erwartet werden. Das wiederum setzt feinkörnige Carbonitridpulver voraus, die bei der Verbundbildung mit Metallen der Fe-Gruppe durch Flüssigphasensintern ein definiertes und gleichmäßiges Kornwachstum zeigen. Wird die Feinkörnigkeit der Carbonitridpulver über Mahlprozesse erreicht, dann tritt zumeist ein starkes und selektives Kornwachstum ein, was entsprechend inhomogene Gefüge erzeugt. Dem Mahlen nachgeschaltete Sichtungen und Klassierungen bringen nur bedingt Abhilfe und verursachen zusätzliche Kosten.

Neben der Feinkörnigkeit ist die Gleichmäßigkeit des Gefüges für solche Eigenschaften wie Bruchzähigkeit, Ermüdungs- und Kriechfestigkeit entscheidend.

Ein breites Kornspektrum erniedrigt den Ermüdungsschnellwert und die Bruchzähigkeit ebenso wie inhomogene Bindemetallverteilungen oder beim Sintern agglomerierte, nicht durch Bindemetall separierte Hartstoffkörner.

Die kritischen statischen oder zyklischen Belastungen, die zur Rißausbreitung in Cermets oder Hartmetallen führen und die die Bruchzähigkeit bzw. die Ermüdungsfestigkeit bestimmen, werden durch die Schwachstellen und Inhomogenitäten entlang der Rißfront bestimmt. Neben Poren und Fremdeinschlüssen (Verunreinigungen) wirken gerade grobe oder agglomerierte Hartstoffkörner, Binderpools, schwache Hartstoff-Hartstoff- oder Hartstoff-Binder-Korngrenzen und weitere Gefügeinhomogenitäten als schwächstes Glied für den lokalen Beginn des Rißwachstums.

Aufgabe dieser Erfindung ist somit die Bereitstellung eines Carbonitrid-Hartstoffpulvers, welches die beschriebenen Nachteile der Pulver des Standes der Technik nicht aufweist.

Diese Anforderungen werden erfüllt durch submicrone Carbonitrid-Pulver des Titans und gegebenenfalls weiterer Übergangsmetalle der fünften ($Me^{(5)}$) und sechsten ($Me^{(6)}$) Nebengruppe des Periodensystems der Elemente mit der allgemeinen molaren Zusammensetzung

$$(Ti_\ell \, Me^{(5)}_m \, Me^{(6)}_{1-\ell-m})(C_{1-y} \, N_y)_z$$

und innerhalb der Grenzen für die metallischen Elemente Ti, $Me^{(5)}$ und $Me^{(6)}$

$$0,5 \leq \ell \leq 1,0 \quad 0 \leq m \leq 0,1 \quad 0 \leq (1-\ell-m) \leq 0,5$$

sowie der Grenzen für die Nichtmetalle C und N

$$0{,}10 \leq y \leq 0{,}95 \text{ und } z \geq 0{,}90, \text{ welche}$$

dadurch gekennzeichnet sind, daß die aus REM-Bildanalysen bestimmten Kornformfaktoren f bezüglich der Mittelwerte $f_M$ in den Grenzen $0{,}80 \leq f_M \leq 0{,}90$ liegen, die dazugehörigen Standardabweichungen $\Delta f \leq 0{,}10$ sind und die mittels SHIMADZU-Zentrifuge ermittelten Kennwerte der Teilchengrößenverteilung (Volumen) unterhalb der folgenden Grenzwerte liegen:

$$d^z(10) \leq 0{,}35 \;\mu m$$

$$d^z(50) \leq 0{,}70 \;\mu m$$

$$d^z(90) \leq 1{,}65 \;\mu m.$$

Die erfindungsgemäßen Carbonitrid-Pulver zeichnen sich somit durch eine große Feinheit bei gleichzeitig enger Korngrößenverteilung und nahezu kugelförmigen Teilchen mit sehr geringen Schwankungen der Kornform aus.

Die Bestimmung des Kornformfaktors kann an REM-Aufnahmen an den entsprechenden Pulver-Körnern mittels Linear- und Kornformanalyse vorgenommen werden. Die Präparation der Pulver ist dabei so vorzunehmen, daß die im REM untersuchte Probe repräsentativ ist, d.h. durch die Präparation keine An- oder Abreicherung von feinen oder groben Pulverteilchen erfolgt.

Die Kornabmessungen können nach dem bekannten Verfahren der Sehnenlängenmessung bestimmt werden. Die für die Kornformcharakterisierung notwendigen Messungen des Kornumfanges U und der Kornfläche A (zweidimensionale Projektion des Kornes auf die Bildfläche) können durch die über $d_u = U/\pi$ und $d_A = (4A/\pi)^{1/2}$ definierten Kornabmessungen bestimmt werden. Der Kornformfaktor f ergibt sich aus der Fläche A und dem Kornumfang U entsprechend $f = 4\pi A/U^2$.

Die Durchmesser $d_u$ und $d_A$ charakterisieren zwei unterschiedliche, kugelförmige Vergleichsteilchen, deren Projektionen auf die Ebene (a) den gleichen Umfang U und (b) die gleiche Fläche A wie das wirkliche (untersuchte) Teilchen haben.

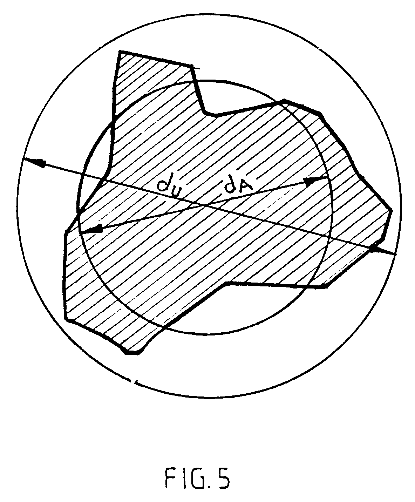

Fig. 5 ist die schematische Darstellung zur Erläuterung des Formfaktors $f = 4\pi A/U^2$:

$d_u$ = Durchmesses eines Kreises, dessen Umfang $U = \pi d_u$ gleich dem projezierten Teilchenumfang ist

$d_A$ = Durchmesser eines Kreises, dessen Fläche gleich der (projezierten) Teilchenfläche ist ($d_A \leq d_u$)

In einer bevorzugten Ausführungsform bedeutet dabei $Me^{(5)}$ = Ta und/oder Nb; $Me^{(6)}$ = Mo und/oder W und für $\ell$ und m gilt $0{,}80 \leq \ell \leq 1{,}00$; $0 \leq m \leq 0{,}1$ und $0 \leq (1-\ell-m) \leq 0{,}20$. Außerdem zeichnen sich die erfindungsgemäßen Hartstoffpulver bevorzugt durch besondere Reinheitsmerkmale bezüglich Sauerstoff- und Kohlenstoffgehalt aus. So beträgt ihr Restsauerstoffgehalt bevorzugt $\leq 0{,}8$ Gew.-% und der Gehalt an freiem Kohlenstoff $\leq 0{,}1$ Gew.-%. Die Summe der Gehalte an Br, Cl und F beträgt vorzugsweise $\leq 0{,}1$ Gew.-%. Charakteristikum der erfindungsgemäß besonders bevorzugten Carbonitrid-Pulver ist, daß sie aus unzerstörten Primärkörnern bestehen.

Für deren Herstellung ist es wesentlich und charakteristisch, daß die vorteilhaften granulometrischen und chemischen Kennwerte bereits im Syntheseprozeß erreicht werden und nicht durch nachfolgende Mahlungen, Klassierungen und weitere thermische Behandlungen eingestellt werden müssen bzw. über diese Prozesse in ihrer Kombination gar nicht einstellbar sind. Die für die Synthese der erfindungsgemäßen Carbonitride notwendigen Gemenge werden durch eine feuchte Mischungsfertigung hergestellt, wobei eine sehr intensive Kontaktierung und homogene Verteilung der reaktiven Komponenten (Titanoxid, Metalle und Metalloxide der fünften und sechsten Nebengruppe des Periodensystems sowie Kohlenstoff) erreicht wird.

Gegenstand dieser Erfindung ist somit auch ein Verfahren zur Herstellung von Carbonitrid-Pulvern durch Mischen stöchiometrischer Mengen der entsprechenden Metalloxide, gegebenenfalls der $Me^{(5)}$- und $Me^{(6)}$-Metalle, Ruß und weiterer C-haltiger Verbindungen sowie Glühung dieser Mischungen unter stickstoffhaltiger Atmosphäre, wobei die C-haltigen Verbindungen als wäßrige Lösungen oder Suspensionen zugegeben werden, diese intensiv vermischt und als zäh viskose Mischungsmasse für die Glühung unter stickstoffhaltiger Atmosphäre eingesetzt werden.

Besonders gute Ergebnisse werden dann erzielt, wenn die wäßrige Suspension neben Ruß mindestens eine C-haltige Verbindung enthält. Die C-haltige Verbindung besteht bevorzugt zusätzlich zu Kohlenstoff nur aus solchen Bestandteilen, daß nach der Glühung ausschließlich systemeigene Elemente wie Stickstoff und Sauerstoff im Syntheseprodukt verbleiben.

Für das erfindungsgemäße Verfahren ist es wesentlich, daß der Reaktionsverlauf der carbothermischen Reduktion der Oxide und der nachfolgenden Carbonitrierung der Metalle durch gleichmäßigere und verkürzte Diffusionswege für C, N, O und CO in den Pulverteilchen beschleunigt wird und gleichmäßiger verläuft. Die in wäßriger Lösung gut vereinzelten Pulverteilchen und die beim Trocknungsprozeß sich auf den Oxidteilchen ablagernden C-Partikel bewirken, daß erstens die Versinterungen zwischen den Oxidteilchen reduziert werden und zweitens alle über Diffusionsprozesse gesteuerten Fest-Fest- und Fest-Gas-förmig-Reaktionen schneller ablaufen bzw. bei niedrigeren Temperaturen beginnen und abgeschlossen werden sowie örtlich gleichmäßiger ablaufen. Dies führt insgesamt zu Pulvern, die in allen chemischen und granulometischen Parametern geringe Schwankungen aufweisen.

Besonders gute Ergebnisse werden erzielt, wenn die C-haltige Verbindung als Kohlenhydrat(e) vorliegt(en). Bevorzugt weist die wäßrige Suspension einen Wasseranteil von 20 bis 60 Gew.-%, bevorzugt 30 bis 50 Gew.-%, bezogen auf den Feststoffgehalt, auf, wobei die Menge des über die C-haltige Verbindung eingebrachten Kohlenstoffs bevorzugt 5 bis 40 Gew.-%, bezogen auf die eingesetzte Menge Ruß, beträgt.

Die Durchführung des erfindungsgemäßen Verfahrens gewährleistet, daß die granulometrisch-morphologischen und chemischen Kennwerte bereits bei der Syntese der Carbonitride eingestellt werden.

Entsprechend dem Verfahren (2), der carbothermischen Reduktion und Carbonitrierung von $TiO_2$-Metalloxid/Metall-Ruß-Gemengen, werden in einem ersten Schritt $TiO_2$-Metalloxid/Metall-Ruß-Gemenge hergestellt und dann in einem zweiten Schritt unter $N_2$-haltigen Atmosphären geglüht. Die für die erfindungsgemäße Lösung besonders bevorzugten Maßnahmen bestehen

a) in einer wäßrig-feuchten Gemengeaufbereitung, bei der ein Teil des Kohlenstoffs nicht über Ruß, sondern über wäßrige Lösungen bzw. Suspensionen C-haltiger Verbindungen angeboten wird,

b) in der rückstandsfreien Umsetzung der gelösten bzw. suspendierten, C-haltigen Verbindungen und

c) in einer bei niedrigen Synthesetemperaturen, hohen Strömungsgeschwindigkeiten der $N_2/H_2/Ar$-Reaktionsgase und bei niedrigen $N_2$-Partialdrücken ausgeführten Synthese.

Insbesondere liegt der $N_2$-Partialdruck deutlich unterhalb des $N_2$-Gleichgewichtsdruckes an der Phasengrenze (Ti, Me)$C_{1-y}N_y$ +$C_{frei}$.

Damit werden die Deagglomeration aller Pulverteilchen, eine intensiv Durchmischung, eine optimale Homogenisierung, die für den Reaktionsverlauf topologisch günstige Kontaktierung der Reaktanten, eine kurze Reaktionszeit und letztlich die Bedingungen für die Synthese feinkörniger, eng dispergierter Pulver gewährleistet.

Dies zusammen mit geeignet eingestellten, strömenden stickstoffhaltigen Syntheseatmosphären ermöglicht die für die erfindungsgemäßen Carbonitride günstigen, niedrigen Glühtemperaturen im Temperaturbereich von 1500 bis 1750°C bei bevorzugten Glühzeiten zwischen 30 Minuten und 3 Stunden.

Das Verfahren kann wie folgt durchgeführt werden.

Zuerst werden die Komponenten $TiO_2$ und (a) (Va-, VIa-)Metalloxide sowie gegebenenfalls (b) (Va-, VIa-)Metalle mit Ruß trocken in einem Intensivmischer gemischt. Zu diesem Trockengemenge wird dann portionsweise eine wäßrige Lösung bzw. Suspension C-haltiger Verbindungen (z.B. Kohlehydrate) im Verhältnis von 20 bis 60 Gew.-% zur Feststoff- bzw. Pulvermasse hinzugegeben und bis zu einer zäh-viskosen Masse verarbeitet. Diese wird in einem Vakuumtrockenschrank auf geeignete, der weiteren Verarbeitung angepaßte Art angetrocknet und mittels einer Lochscheibenpresse oder eines Extruders als strangförmiges Material mit 0,5 bis 5 mm Durchmesser ausgepreßt und in Graphittiegel für die Wärmebehandlung abgefüllt. Anschließend erfolgt bei Temperaturen zwischen 1500 und 1750°C eine Glühung unter $N_2/H_2/Ar$-Atmosphären mit Glühzeiten zwischen 30 und 180 min. Das im Carbonitrid angestrebte (C:N)-Verhältnis wird sowohl über die Komponenteneinwaage als auch über die Temperatur, den $N_2$-Partialdruck des strömenden Gases und den Gesamtdurchsatz des Reaktionsgases eingestellt.

Gegenstand dieser Erfindung ist auch die Verwendung der erfindungsgemäßen Carbonitrid-Pulver zur Herstellung von Sinterformkörpern mit submicronen Gefügen durch Sintern von 3 bis 25 Gew.-% an Bindermetallen aus der Eisengruppe des Periodensystems der Elemente mit den erfindungsgemäßen Carbonitriden und gegebenenfalls weiterer Carbiden und Nitriden.

Im folgenden wird die Erfindung beispielhaft erläutert, ohne daß hierin eine Einschränkung zu sehen ist.

### Beispiel 1

2 kg Titandioxid mit einer spezifischen Oberfläche von 12 $m^2$/g (BET) sowie 679 g Ruß mit einer spezifischen Oberfläche von 45 $m^2$/g wurden in einem Intensivmischer 5 min trocken vermischt. Dann erfolgte die portionsweise Zugabe von 1,3 l Zuckerlösung (200 g Raffinade auf 1,2 l dest. Wasser), wobei die Drehzahlen des Intensivmischers sukzessive gesteigert wurden. Nach einer Mischdauer von 15 min bei Drehzahlen für die Mischerwelle von 2500 U/min sowie 64 U/min für den Mischertopf entstand eine homogene, zäh-viskose Masse, die dem Mischer entnommen und bei 80°C, ca. 5 h in einem Vakuumtrockenschrank in ausgestrichenem Zustand (ca. 2 cm Schichtstärke) angetrocknet wurde. Anschließend wurde die noch hinreichend viskose Masse über eine Lochscheibenpresse mit einem Strangdurchmesser von 1,5 mm verpreßt und als lockeres Haufwerk in einen Graphittiegel abgefüllt. Das so präparierte und abgefüllte Material wurde unter strömender $N_2/H_2$-Atmosphäre 80 min isotherm bei 1600°C geglüht. Die Aufheizgeschwindigkeit für das Synthesematerial lag bei 5 K/min. Der $N_2/H_2$-Gasdurchsatz betrug 33 l/min, wobei der Partialdruck des $N_2$ in der Gasatmosphäre 10 bis 50 % des thermodynamischen $N_2$-Gleichgewichtsdruckes erreichte und das $N_2/H_2$-Reaktionsgas mit einer Geschwindigkeit von ca. 35 m/min über dem Synthesematerial strömte. Zur Intensivierung des Reaktionsverlaufs und besseren Abführung des entstehenden CO waren die Stirn- und Rückseiten der Synthesetiegel mit Gaseinlaß- und -auslaßschlitzen versehen, sowie im Ofen geeignete Gasleiteinrichtungen angebracht.

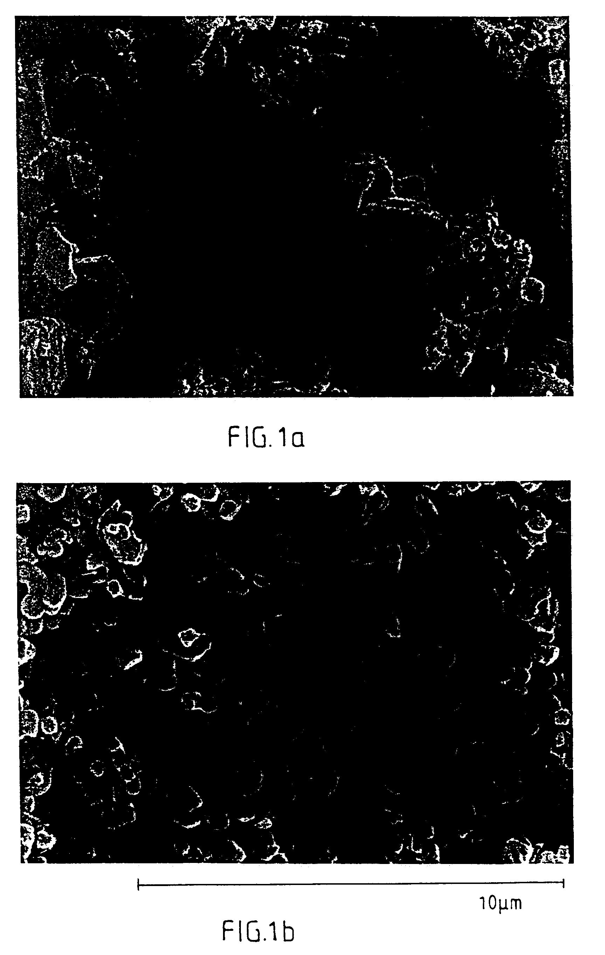

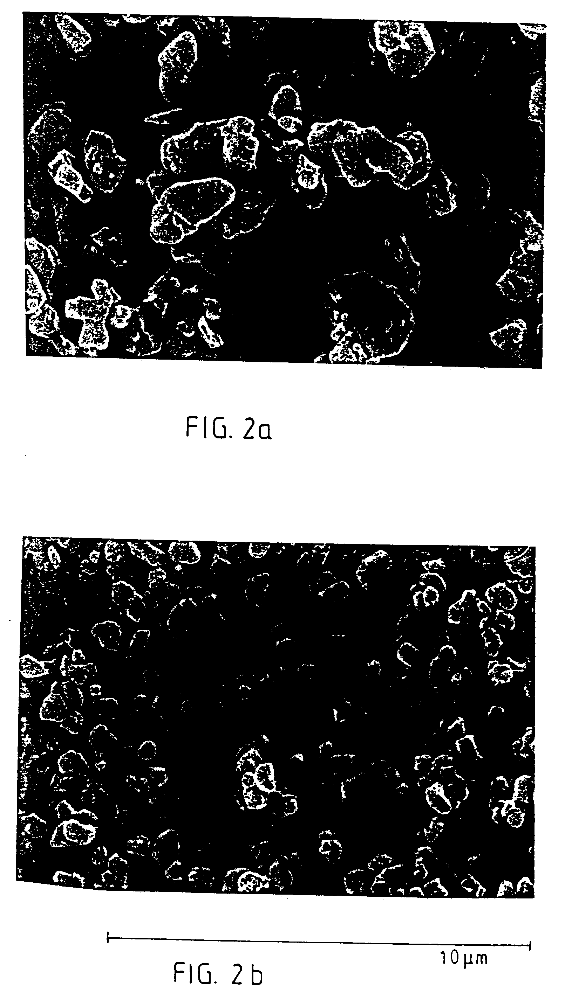

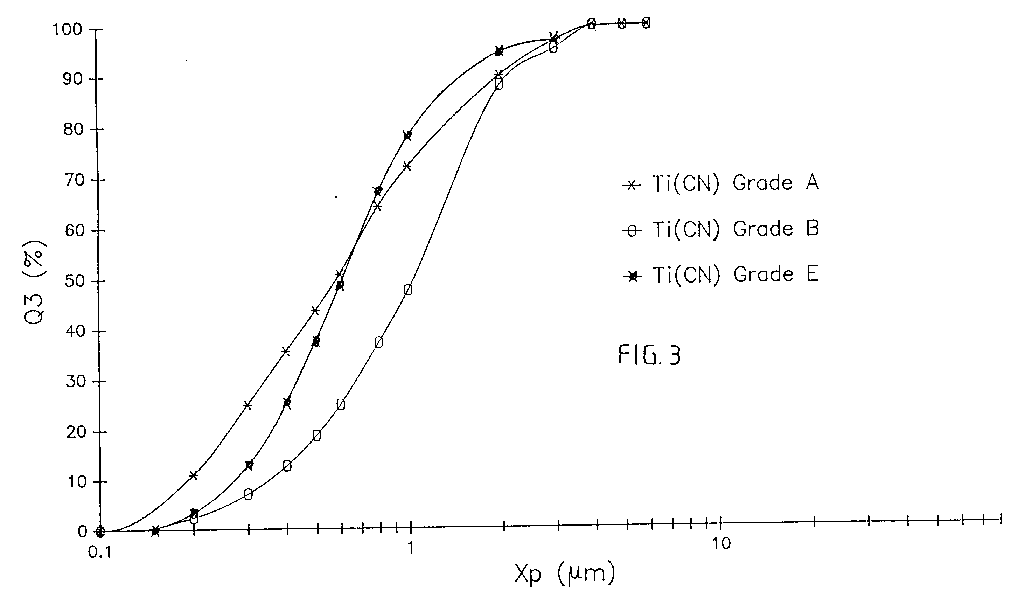

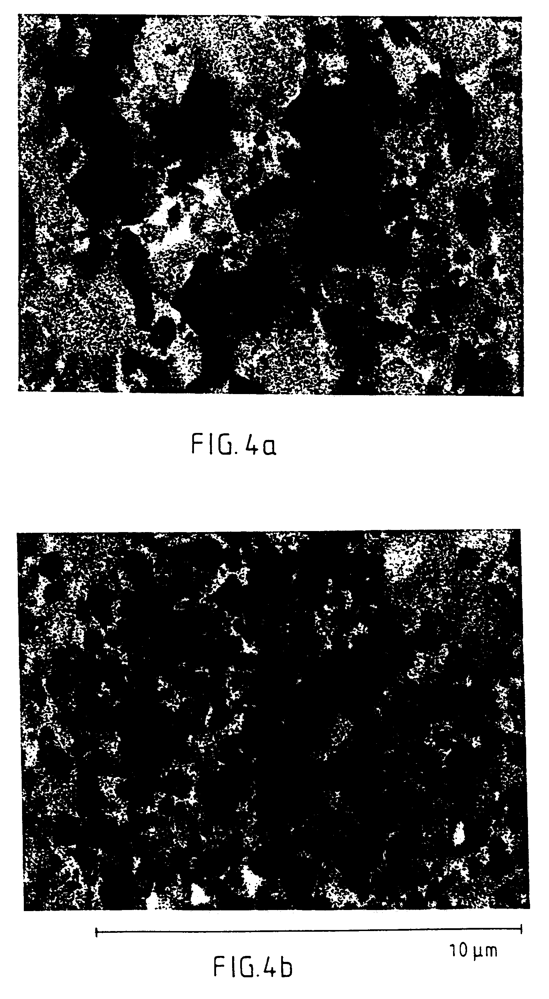

Das carbonitrierte Material lag nach der Synthese noch in der strang- bzw. spaghettiförmigen Gestalt vor, ließ sich aber leicht per Hand zerdrücken. Eine trockene Aufmahlung von 4 h in der Kugelmühle bei 60 U/min und einem Verhältnis Mahlkörpermasse zu Carbonitridpulver von 5:1 genügte für eine vollständige Deagglomeration des Pulvers. Das so hergestellte Carbonitridpulver ist durch die Zusammenstellung der folgenden Kennwerte und die Fig. 1 bis 4 gekennzeichnet (Prozentangaben sind Massenprozent):

| | |
|---|---|
| Gesamter Kohlenstoff ($C_{ges}$): | 9,79 % |
| Freier Kohlenstoff ($C_{frei}$): | 0,02 % |
| Stickstoffgehalt: | 11,30 % |
| Sauerstoffgehalt: | 0,51 % |
| Chloridgehalt: | <0,10 % |
| FISHER-Korngröße (ASTM B 330, FSSS) | 0,85 $\mu$m |
| Spezifische Oberfläche (BET nach DIN 66 131) | 3,56 $m^2$/g |
| REM-Teilchengröße $d_B$ | 0,75 $\mu$m |
| Standardabweichung der Teilchengröße (delta) $d_B$ | 0,29 $\mu$m |
| Formfaktor (Mittelwert) f | 0,86 |
| Standardabweichung des Formfaktors (delta) f | 0,09 |
| d(10)-Wert nach SHIMADZU[1] | 0,28 $\mu$m |
| d(50)-Wert nach SHIMADZU[1] | 0,61 $\mu$m |
| d(90)-Wert nach SHIMADZU[1] | 1,28 $\mu$m |

[1] Grundlagen Sedimentationsanalyse. Auswertegleichungen zur Mengenmessung im Fliehkraftfeld Beiblatt 1 zu DIN 66 111, Februar 1989.

Die Analyse entspricht einem (Oxi)Carbonitrid der stöchiometrischen Zusammensetzung

$$TiC_{0,498}N_{0,494}O_{0,023} \; bzw.$$

$$Ti(C_{0,491}N_{0,487}O_{0,022})_{1,015}.$$

Die Fig. 1 zeigt REM-Aufnahmen dieses Carbonitridpulvers (grade E, unten) und eines über Diffusionsglühung hergestellten und intensiv aufgemahlenen Carbonitrides vergleichbarer Zusammensetzung (grade A, oben).

Fig. 2 zeigt REM-Aufnahmen dieses Carbonitridpulvers (grade E, unten) und eines über carbothermische Reduktion von $TiO_2$-Ruß-Trockengemengen hergestellten Carbonitrides vergleichbarer Zusammensetzung (grade B, oben).

Fig. 3 zeigt die mittels SHIMADZU-Zentrifuge SA-CP 2 bestimmte Teilchengrößenverteilung (Volumen) dieses Carbonitridpulvers (grade E) im Vergleich zu den entsprechenden Teilchengrößenverteilungen der Vergleichspulver grade A (Diffusionsglühung, siehe Fig. 1) und grade B (carbothermische Reduktion von trocken gefertigten $TiO_2$-Ruß-Gemengen, siehe Fig. 2).

An Sedimentationsflüssigkeit wurde bei der Teilchengrößenbestimmung Wasser mit 0,01 % Calgon eingesetzt, die Dispergierung bei 10 min Ultraschallbehandlung durchgeführt und analysiert wurde bei einem Zentrifugalmodus von 1000 U/min.

Fig. 4 zeigt REM-Aufnahmen von Gefügen an Cermets, die (a) unter Verwendung eines diffusionsgeglühten Carbonitrids (grade A, obere Fig.) und (b) unter Einsatz eines erfindungsgemäßen Carbonitrids (grade E, untere Fig.) mit ansonsten gleichartigen Ni/Co-Bindern und (W, Ta, Mo)-Carbiden gesintert wurden.

**Beispiel 2**

Unter Einsatz der gleichen Ausgangsstoffe, Titandioxid $TiO_2$ und Ruß wurde zur Herstellung eines TiCN-Carbonitrides ein Gemenge mit 2 kg $TiO_2$ und 623 g Ruß eingewogen und in gleicher Weise wie im Beispiel 1 durch Zugabe einer Zuckerlösung (184,5 g Raffinade auf 1,3 l dest. Wasser) im Intensivmischer aufbereitet, angetrocknet und verpreßt. Die Synthese erfolgte wiederum bei 1600°C (isotherme Haltezeit von 80 min), jedoch bei einem deutlich erhöhten Gesamtdurchsatz von 72 l/min $N_2/H_2$-Gasgemisch und einem $N_2$-Partialdruck im strömenden Gas, der bei 5 bis 25 % des thermodynamischen $N_2$-Gleichgewichtsdruckes (Gleichgewichtsdruck an der Phasengrenze $TiC_{1-y}N_y+C_{frei}$) lag. Das Syntheseprodukt war im Unterschied zu dem grauen $TiC_{1-y}N_y$-Pulver des Ausführungsbeispiels 1 schwach lila gefärbt, ließ sich ebenfalls mit einer wenig intensiven Mahlung aufarbeiten und vollständig deagglomerieren, d.h. in die Primärkornteilchen zerlegen, ohne daß diese selbst gebrochen wurden. Das so hergestellte Pulver ist durch die folgenden Kennwerte charakterisiert:

| | |
|---|---|
| Gesamter Kohlenstoff ($C_{ges}$): | 5,91 % |
| Freier Kohlenstoff ($C_{frei}$): | 0,02 % |
| Stickstoffgehalt: | 15,90 % |
| Sauerstoffgehalt: | 0,60 % |
| Chloridgehalt: | <0,10 % |
| FISHER-Korngröße (ASTM B 330, FSSS): | 0,90 $\mu$m |
| Spezifische Oberfläche (BET nach DIN 66 131) | 3,20 $m^2$/g |
| REM-Teilchengröße $d_B$ | 0,72 $\mu$m |
| Standardabweichung der Teilchengröße (delta) $d_B$ | 0,35 $\mu$m |
| Formfaktor (Mittelwert) f | 0,87 |
| Standardabweichung des Formfaktors (delta) f | 0,10 |
| d(10)-Wert nach SHIMADZU[1] | 0,29 $\mu$m |
| d(50)-Wert nach SHIMADZU[1] | 0,67 $\mu$m |
| d(90)-Wert nach SHIMADZU[1] | 1,39 $\mu$m |

[1] Grundlagen Sedimentationsanalyse. Auswertegleichungen zur Mengenmessung im Fliehkraftfeld Beiblatt 1 zu DIN 66 111, Februar 1989

Die Analyse entspricht einem (Oxi)Carbonitrid der Stöchiometrie:

$$TiC_{0,304}N_{0,701}O_{0,023} \text{ bzw.}$$

$$Ti(C_{0,296}N_{0,682}O_{0,022})_{1,028}.$$

Zur Bestimmung des Formfaktors wurden an nachvergrößerten REM-Aufnahmen mit $10^4$-facher Vergrößerung jeweils ca. 200 Körner mittels Linear- und Kornformanalyse ausgewertet. Die Kornabmessungen wurden nach dem bekannten Verfahren der Sehnenlängenmessung bestimmt. Zusätzlich wurden aus den für die Kornformcharakterisierung notwendigen Messungen des Kornumfanges U und der Kornfläche A (zweidimensionale Projektion des Kornes auf die Bildfläche) die über $d_u = U/\pi$ und $d_A = (4A/\pi)^{1/2}$ definierten Kornabmessungen bestimmt. Der Kornformfaktor f ergibt sich aus der Fläche A und dem Kornumfang U entsprechend $f = 4\pi A/U^2$.

Die Durchmesser $d_u$ und $d_A$ charakterisieren zwei unterschiedliche, kugelförmige Vergleichsteilchen, deren Projektionen auf die Ebene (a) den gleichen Umfang U und (b) die gleiche Fläche A wie das wirkliche (untersuchte) Teilchen haben.

Fig. 5 ist die schematische Darstellung zur Erläuterung des Formfaktors $f = 4 \pi A/U^2$ :

$d_u =$ Durchmesses eines Kreises, dessen Umfang $U = \pi d_u$ gleich dem projezierten Teilchenumfang ist

$d_A =$ Durchmesser eines Kreises, dessen Fläche gleich der (projezierten) Teilchenfläche ist ($d_A \leq d_u$).

## Patentansprüche

1. Submicrone Carbonitrid-Pulver des Titans und gegebenenfalls weiterer Übergangsmetalle der fünften ($Me^{(5)}$) und sechsten ($Me^{(6)}$) Nebengruppe des Periodensystems der Elemente mit der allgemeinen molaren Zusammensetzung

$$(Ti_\ell \, Me^{(5)}_m \, Me^{(6)}_{1-\ell-m})(C_{1-y} \, N_y)_z$$

und innerhalb der Grenzen für die metallischen Elemente Ti, $Me^{(5)}$ und $Me^{(6)}$

$$0,5 \leq \ell \leq 1,0 \quad 0 \leq m \leq 0,1 \quad 0 \leq (1-\ell-m) \leq 0,5$$

sowie der Grenzen für die Nichtmetalle C und N

$$0,10 \leq y \leq 0,95 \text{ und } z \geq 0,90$$

dadurch gekennzeichnet, daß die aus REM-Bildanalysen bestimmten Kornformfaktoren f bezüglich der Mittelwerte $f_M$ in den Grenzen $0,80 \leq f_M \leq 0,90$ liegen, die dazugehörigen Standardabweichungen $\Delta f \leq 0,10$ sind und die mittels SHIMADZU-Zentrifuge ermittelten Kennwerte der Teilchengrößenverteilung (Volumen) unterhalb der folgenden Grenzwerte liegen:

$$d^z (10) \leq 0,35 \; \mu m$$

$$d^z (50) \leq 0,70 \; \mu m$$

$$d^z (90) \leq 1,65 \; \mu m.$$

2. Carbonitrid-Pulver gemäß Anspruch 1, dadurch gekennzeichnet, daß $Me^{(5)}$ = Ta und/oder Nb, $Me^{(6)}$ = Mo und/oder W bedeutet und

$$0,80 \leq \ell \leq 1,00,$$

$$0 \leq m \leq 0,10 \text{ und}$$

$$0 \leq (1-\ell-m) \leq 0,20$$

gilt.

3. Carbonitrid-Pulver gemäß einem der Ansprüche 1 oder 2, dadurch gekennzeichnet, daß ihr Restsauerstoffgehalt $\leq 0,8$ Gew.-% und der Gehalt an freiem Kohlenstoff $\leq 0,1$ Gew.-% beträgt.

4. Carbonitrid-Pulver gemäß einem oder mehreren der Ansprüche 1 bis 3, dadurch gekennzeichnet, daß die Summe der Gehalte an Br, Cl und F $\leq 0,1$ Gew.-% beträgt.

5. Carbonitrid-Pulver gemaß einem oder mehreren der Ansprüche 1 bis 4, dadurch gekennzeichnet, daß sie aus unzerstörten Primärkörnern bestehen.

6. Verfahren zur Herstellung von Carbonitrid-Pulvern durch Mischen stöchiometrischer Mengen der entsprechenden Metalloxide, gegebenenfalls der $Me^{(5)-}$ und $Me^{(6)}$-Metalle, Ruß und weiterer C-haltiger Verbindungen sowie Glühung dieser Mischungen unter stickstoffhaltiger Atmosphäre, dadurch gekennzeichnet, daß die C-haltigen Verbindungen als wäßrige Lösungen oder Suspensionen zugegeben werden, diese intensiv vermischt und als zäh viskose Mischungsmasse für die Glühung unter stickstoffhaltiger Atmosphäre eingesetzt werden.

7. Verfahren gemäß Anspruch 6, dadurch gekennzeichnet, daß die C-haltigen Verbindungen, die in wäßrigen Lösungen oder Suspensionen in die Mischung eingebracht werden, zusätzlich zu Kohlenstoff nur aus solchen Bestandteilen bestehen, daß nach der Glühung ausschließlich systemeigene Elemente wie Stickstoff und Sauerstoff im Syntheseprodukt verbleiben.

8. Verfahren gemäß einem der Ansprüche 6 oder 7, dadurch gekennzeichnet, daß die C-haltigen Verbindungen als Kohlenhydrate vorliegen.

9. Verfahren gemäß einem oder mehreren der Ansprüche 6 bis 8, dadurch gekennzeichnet, daß die zäh viskose Mischungsmasse einen Wasseranteil von 20 bis 60 Gew.-%, bevorzugt 30 bis 50 Gew.-%, bezogen auf den Feststoffgehalt an Oxiden, Metallen und Ruß aufweisen.

10. Verfahren gemäß einem oder mehreren der Ansprüche 6 bis 9, dadurch gekennzeichnet, daß die Menge des über die C-haltige Verbindung eingetragenen Kohlenstoffs 5 bis 40 Gew.-%, bezogen auf die eingesetzte Menge Ruß, beträgt.

11. Verfahren gemäß einem oder mehreren der Ansprüche 6 bis 10, dadurch gekennzeichnet, daß die Glühung im Temperaturbereich von 1500 - 1750°C bei Glühzeiten von 30 min bis 3 h durchgeführt wird.

12. Verwendung von submicronen Carbonitrid-Pulvern gemäß einem oder mehreren der Ansprüche 1 bis 5 zur Herstellung von submicronen Gefügen durch Umsetzung mit 3 bis 25 Gew.-% an Bindermetallen aus der Eisengruppe des Periodensystems der Elemente.

## Claims

1. Submicron carbonitride powders of titanium and optionally of other transition metals of the fifth ($Me^{(5)}$) and sixth ($Me^{(6)}$) subgroup of the periodic system of the elements, which have the general molar composition

$$(Ti_\ell \, Me^{(5)}_m \, Me^{(6)}_{1-\ell-m}) \, (C_{1-y} \, N_y)_z$$

and wherein for the metallic elements Ti, $Me^{(5)}$ and $Me^{(6)}$ the limits are

$$0.5 \leq \ell \leq 1.0 \quad 0 \leq m \leq 0.1 \quad 0 \leq 1-\ell-m \leq 0.5$$

and for the non-metals C and N the limits are

$$0.10 \leq y \leq 0.95 \text{ and } z \geq 0.90,$$

characterised in that the particle shape factors f, determined from SEM image analyses, with regard to the mean values $f_M$ are within the limits $0.80 \leq f_M \leq 0.90$, the associated standard deviations $\Delta f \leq 0.10$ and the characteristic values of the particle size distribution (volume), determined by means of a SHIMADZU centrifuge, are below the following limiting values:

$$d^z \, (10) \leq 0.35 \, \mu m$$

$$d^z \, (50) \leq 0.70 \, \mu m$$

$$d^z \, (90) \leq 1.65 \, \mu m.$$

2. Carbonitride powders according to claim 1, characterised in that $Me^{(5)}$ denotes Ta and/or Nb, $Me^{(6)}$ denotes Mo and/or W and

$$0.80 \leq \ell \leq 1.00,$$

$$0 \leq m \leq 0.10 \text{ and}$$

$$0 \leq 1\text{-}\ell\text{-m} \leq 0.20.$$

3. Carbonitride powders according to one of claims 1 or 2, characterised in that their residual oxygen content is $\leq 0.8$ wt.% and the free carbon content is $\leq 0.1$ wt.%.

4. Carbonitride powders according to one or more of claims 1 to 3, characterised in that the sum of the contents of Br, Cl and F is $\leq 0.1$ wt.%.

5. Carbonitride powders according to one or more of claims 1 to 4, characterised in that they consist of unbroken primary particles.

6. A process for the production of carbonitride powders by mixing stoichiometric quantities of the corresponding metal oxides, optionally of the $Me^{(5)}$- and $Me^{(6)}$-metals, carbon black and other carbon-containing compounds and calcining these mixtures in a nitrogen-containing atmosphere, characterised in that the carbon-containing compounds are added as aqueous solutions or suspensions, these are intensively mixed in and the resulting mixtures are used as a highly viscous mixing composition for the calcination in a nitrogen-containing atmosphere.

7. A process according to claim 6, characterised in that the carbon-containing compounds which are introduced in aqueous solutions or suspensions into the mixture, in addition to carbon consist only of components such that, after the calcination, only elements pertaining to the system, such as nitrogen and oxygen, remain in the synthesis product.

8. A process according to one of claims 6 or 7, characterised in that the carbon-containing compounds are present as carbohydrates.

9. A process according to one or more of claims 6 to 8, characterised in that the highly viscous mixing composition has a water content of from 20 to 60 wt.%, preferably 30 to 50 wt.%, based on the solid content of oxides, metals and carbon black.

10. A process according to one or more of claims 6 to 9, characterised in that the quantity of the carbon introduced via the carbon-containing compound is from 5 to 40 wt.%, based on the quantity of carbon black used.

11. A process according to one or more of claims 6 to 10, characterised in that the calcination is carried out in the temperature range of 1500°C to 1750°C for calcining times of from 30 minutes to 3 hours.

12. The use of submicron carbonitride powders according to one or more of claims 1 to 5 for the production of submicron structures by reaction with 3 wt.% to 25 wt.% binder metals from the iron group of the periodic system of the elements.

**Revendications**

1. Poudres submicroniques de carbonitrures du titane et le cas échéant d'autres métaux de transition du cinquième $(Me^{(5)})$ et du sixième $(Me^{(6)})$ sous-groupes de la classification périodique des éléments, à la composition moléculaire globale

$$(Ti_{\ell}Me^{(5)}_{m}Me^{(6)}_{1\text{-}\ell\text{-m}})(C_{1\text{-y}}N_{y})_{z}$$

avec les limites suivantes pour les teneurs en les éléments métalliques Ti, $Me^{(5)}$ et $Me^{(6)}$

$$0,5 \leq \ell \leq 1,0 \quad 0 \leq m \leq 0,1 \quad 0 \leq (1\text{-}\ell\text{-m}) \leq 0,5$$

et les limites suivantes pour les non métaux C et N

$$0,10 \leq y \leq 0,95 \text{ et } z \geq 0,90,$$

ces poudres se caractérisant en ce que les facteurs de forme des grains, déterminés par analyse des images de REM, se situent par rapport à la valeur moyenne $f_M$ dans les limites de $0,80 \leq f_M \leq 0,90$, les écarts-types correspondants sont de $\Delta f \leq 0,10$ et les caractéristiques de la répartition des dimensions de grain (en volume), déterminées à la centrifugeuse SHIMADZU, se situent au dessous des valeurs limites suivantes :

$$d^z (10) \leq 0,35 \ \mu m$$

$$d^z (50) \leq 0,70 \ \mu m$$

$$d^z (90) \leq 1,65 \ \mu m$$

2. Poudres de carbonitures selon la revendication 1, caractérisées en ce que Me$^{(5)}$ = Ta et/ou Nb, Me$^{(6)}$ = Mo et/ou W et

$$0,80 \leq \ell \leq 1,00,$$

$$0 \leq m \leq 0,10 \ et$$

$$0 \leq (1-\ell-m) \leq 0,20$$

3. Poudres de carbonitrures selon l'une des revendications 1 ou 2, caractérisées en ce que leur teneur résiduelle en oxygène est $\leq 0,8\%$ en poids et leur teneur en carbone libre $\leq 0,1$ % en poids.

4. Poudres de carbonitrures selon une ou plusieurs des revendications 1 à 3, caractérisées en ce que la somme des teneurs en Br, Cl et F est $\leq 0,1\%$ en poids.

5. Poudres de carbonitrures selon une ou plusieurs des revendications 1 à 4, caractérisées en ce qu'elles consistent en grains primaires intacts.

6. Procédé de préparation de poudres de carbonitrures par mélange de quantités stoechiométriques des oxydes métalliques correspondants, le cas échéant des métaux Me$^{(5)}$ et Me$^{(6)}$, de noir de carbone et d'autres composés carbonés et calcination de ces mélanges en atmosphère contenant de l'azote, caractérisé en ce que les composés carbonés sont ajoutés à l'état de solutions ou suspensions aqueuses qui sont soumises à mélange intensif et mises en oeuvre à l'état de masse visqueuse épaisse pour la calcination en atmosphère contenant de l'azote.

7. Procédé selon la revendication 6 caractérisé en ce que les composés carbonés introduits dans le mélange à l'état de solutions ou de suspensions aqueuses consistent, en dehors du carbone, exclusivement en constituants qui, après calcination, restent dans le produit de synthèse à l'état d'éléments non étrangers au système, comme l'azote et l'oxygène.

8. Procédé selon l'une des revendications 6 ou 7, caractérisé en ce que les composés carbonés sont des hydrates de carbone.

9. Procédé selon une ou plusieurs des revendications 6 à 8, caractérisé en ce que la masse visqueuse épaisse du mélange a une teneur en humidité de 20 à 60% en poids, de préférence de 30 à 60% en poids, par rapport à la teneur en matières solides consistant en oxydes, métaux et noir de carbone.

10. Procédé selon une ou plusieurs des revendications 6 à 9, caractérisé en ce que la quantité de carbone introduite par les composés carbonés représente de 5 à 40% du poids du noir de carbone mis en oeuvre.

11. Procédé selon une ou plusieurs des revendications 6 à 10, caractérisé en ce que la calcination est réalisée dans l'intervalle de température de 1500 à 1750°C dans des durées de 30 minutes à 3 heures.

12. Utilisation des poudres submicroniques de carbonitrures selon une ou plusieurs des revendications 1 à 5, pour la préparation de structures submicroniques par réaction avec 3 à 25% en poids de métaux liants du groupe du fer de la classification périodique des éléments.

FIG. 1a

10μm

FIG.1b

FIG. 2a

10 μm

FIG. 2 b

FIG. 3

EP 0 572 788 B1

FIG. 4a

10 μm

FIG. 4b

FIG. 5